# EUROPEAN PATENT APPLICATION

(11) **EP 4 775 300 A1**
(43) Date of publication of application: **15.07.2026**
(21) Application number: 24862139.3
(22) Date of filing: 06.11.2024
(51) Int. Cl.: B01F 27/091, B01F 27/192, B01F 27/90, B01F 35/12, B01F 35/32, F16J 15/40, B63H 23/36

(54) **KNEADING APPARATUS**

(30) Priority: 06.09.2023 CN 202322422410 U
(71) Applicant: Shangshui Smartech Ltd., Shenzhen, Guangdong 518118 (CN)
(72) Inventor: HUANG, Duan, Shenzhen, Guangdong 518118 (CN); JIN, Xudong, Shenzhen, Guangdong 518118 (CN); LI, Tongzhu, Shenzhen, Guangdong 518118 (CN); ZHENG, Jiaorong, Shenzhen, Guangdong 518118 (CN); DU, Baodong, Shenzhen, Guangdong 518118 (CN)
(74) Representative: Mathys & Squire
(86) International application number: PCT/CN2024/130124
(87) International publication number: WO 2025/051301

(57) **Abstract**

A kneading device (1000) is provided in the disclosure. A stirring chamber (11) is defined in the kneading cylinder (10). A mounting base (20) is provided with a first mounting hole (211) and a first through hole (212). A first rotating shaft (31) is disposed in the first mounting hole (211), and is provided with a second mounting hole (311). The first rotating shaft (31) is provided with a second through hole (312) communicating with both the first mounting hole (211) and the second mounting hole (311). A second rotating shaft (32) is disposed in the second mounting hole (311). A first sealing member (41), the mounting base (20), and the first rotating shaft (31) form a first air passage. A second sealing member (42), the first rotating shaft (31), and the second rotating shaft (32) form a second air passage. A gas supply device supplies gas to the first air passage and the second air passage to prevent powder particles from entering the first air passage and the second air passage and causing damage to the mounting base (20), the first rotating shaft (31), and the second rotating shaft (32).

## Description

### TECHNICAL FIELD

The present disclosure relates to the field of kneading device technology, and in particular, to a kneading device.

### BACKGROUND

In existing kneading devices, a rotating shaft is sealingly connected to a shaft seal base through a contact-type sealing ring. Powder particles in a stirring chamber easily enter a gap between the shaft seal base and the rotating shaft. These powder particles can easily cause wear of the sealing ring and the rotating shaft, leading to sealing failure between the rotating shaft and the shaft seal base.

### SUMMARY

The disclosure provides a kneading device to solve the problem that powder particles easily enter a gap between a shaft seal base and the rotating shaft.

In a first aspect, the disclosure provides a kneading device. The kneading device includes a kneading cylinder, a mounting base, a first rotating shaft, a second rotating shaft, a first sealing member, and a second sealing member. A stirring chamber is defined in the kneading cylinder. The mounting base is connected to the kneading cylinder. The mounting base is provided with a first mounting hole communicating with the stirring chamber, and a side wall of the mounting base is provided with a first through hole communicating with the first mounting hole. The first rotating shaft rotatably extends through the first mounting hole. The first rotating shaft is provided with a second mounting hole communicating with the stirring chamber, and a side wall of the first rotating shaft is provided with a second through hole communicating with both the first mounting hole and the second mounting hole. The second rotating shaft rotatably extends through the second mounting hole and is disposed coaxially with the first rotating shaft. The first sealing member is disposed between the first rotating shaft and the mounting base, and is located on a side of the first through hole and the second through hole away from the stirring chamber. The first sealing member, the mounting base, and the first rotating shaft form a first air passage communicating the first through hole with the stirring chamber. The second sealing member is sealingly connected between the second rotating shaft and the first rotating shaft, and is located on a side of the second through hole away from the stirring chamber. The second sealing member, the first rotating shaft, and the second rotating shaft form a second air passage communicating the second through hole with the stirring chamber.

In some embodiments, the first through hole extends from a side of the mounting base away from the first rotating shaft toward a side of the mounting base close to the first rotating shaft, and the first through hole is inclined toward the stirring chamber.

In some embodiments, the second through hole is implemented as multiple second through holes, and the multiple second through holes are spaced apart and disposed around a circumferential direction of the first rotating shaft.

In some embodiments, the kneading device further includes a first labyrinth member disposed between the mounting base and the first rotating shaft. The first labyrinth member is disposed around the first rotating shaft, and the first labyrinth member is spaced apart from the first rotating shaft or the mounting base to form a first gap communicating with the first air passage. The first labyrinth member is provided with at least one first annular groove on a side of the first labyrinth member facing the first gap.

In some embodiments, the first rotating shaft includes a first shaft body and a first bush sleeved on the first shaft body. The first labyrinth member is spaced apart from the first bush to form the first gap.

In some embodiments, the first bush includes a first section and a second section. The first section is connected to a side of the second section away from the stirring chamber. A diameter of the first section is greater than a diameter of the second section.

In some embodiments, the second through hole is defined at an end portion of the second section close to the first section.

In some embodiments, the kneading device further includes a second labyrinth member disposed between the first rotating shaft and the second rotating shaft. The second labyrinth member is disposed around the second rotating shaft, and the second labyrinth member is spaced apart from the first rotating shaft or the second rotating shaft to form a second gap communicating with the second air passage. The second labyrinth member is provided with at least one second annular groove on a side of the second labyrinth member facing the second gap.

In some embodiments, the second rotating shaft includes a second shaft body and a second bush sleeved on the second shaft body. The second labyrinth member is spaced apart from the second bush to form the second gap.

In some embodiments, a guiding surface is provided on a side of the first labyrinth member away from the stirring chamber and a guiding surface is provided on a side of the second labyrinth member away from the stirring chamber.

In the kneading device provided by the disclosure, the side wall of the mounting base is provided with the first through hole communicating with a first mounting cavity, the side wall of the first rotating shaft is provided with the second through hole communicating with both the first mounting hole and the second mounting hole. The first sealing member, the mounting base, and the first rotating shaft form the first air passage communicating the first through hole with the stirring chamber. The second sealing member, the first rotating shaft, and the second rotating shaft form the second air passage communicating the second through hole with the stirring chamber. In this way, a gas supply device can supply gas to the first air passage through the first through hole. After the gas enters the first air passage, a portion of the gas enters the stirring chamber through the gap between the first rotating shaft and the mounting base, and another portion of the gas enters the second air passage through the second through hole and enters the stirring chamber through the gap between the first rotating shaft and the second rotating shaft. Powder particles in the stirring chamber are blocked by air flow, making it difficult for the powder particles to enter the first air passage and the second air passage, thereby preventing the powder particles from entering the positions between the first rotating shaft and the mounting base, and between the second rotating shaft and the first rotating shaft. This prevents the powder particles from damaging the mounting base, the first rotating shaft, and the second rotating shaft, and thus improving the service life of the coating device.

### BRIEF DESCRIPTION OF THE DRAWINGS

In order to more clearly illustrate the technical solutions in the embodiments of the disclosure, the drawings required for use in the embodiments will be briefly introduced below. Obviously, the drawings in the following description are only some embodiments of the disclosure. For those skilled in the art, other drawings may be obtained based on these drawings without creative efforts.
FIG. 1 is a cross-sectional view of a kneading device provided in embodiments of the disclosure.
FIG. 2 is an enlarged view of section I in FIG. 1.
FIG. 3 is a cross-sectional view of the kneading device provided in embodiments of the disclosure, with some components being removed.
FIG. 4 is an enlarged view of section II in FIG. 3.
FIG. 5 is a structural block diagram of a kneading system provided in embodiments of the disclosure.

Illustration of main reference signs: kneading device 1000; kneading cylinder 10; stirring chamber 11; first stirring paddle 121; second stirring paddle 122; mounting base 20; first mounting hole 211; first through hole 212; gas tube 22; fixing base 23; first rotating shaft 31; second mounting hole 311; second through hole 312; first shaft body 33; first portion 33a; second portion 33b; first bush 331; first section 3311; second section 3312; third bush 332; first bearing 333; first connecting member 334; first tensioning component 335; first tensioning member 3351; first mating member 3352; second rotating shaft 32; second shaft body 34; second bush 341; second bearing 342; second connecting member 343; second tensioning component 344; second tensioning member 3441; second mating member 3442; first sealing member 41; second sealing member 42; first labyrinth member 51; first gap 501; first annular groove 511; second labyrinth member 52; second gap 502; second annular groove 521.

The following specific embodiments will further illustrate the disclosure in conjunction with the above-mentioned drawings.

### DETAILED DESCRIPTION

The following will illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

Reference herein to an "embodiment" or "implementation" means that a particular feature, structure, or characteristic described in connection with the embodiment or implementation may be included in at least one embodiment of the disclosure. The appearances of this phrase in various places in the specification are not necessarily all referring to the same embodiment, nor are they independent or alternative embodiments mutually exclusive with other embodiments. It is explicitly and implicitly understood by those skilled in the art that the embodiments described herein may be combined with other embodiments.

It may be noted that, the terms in the specification, claims, and the above-mentioned drawings of the disclosure are only used to describe specific embodiments and are not intended to limit the disclosure. The terms "first", "second", and the like in the specification, claims, and the above-mentioned drawings of the disclosure are used to distinguish different objects, rather than to describe a specific order. The term "and/or" used in the specification and the appended claims of the disclosure refers to any combination of one or more of the associated listed items and all possible combinations, and includes these combinations.

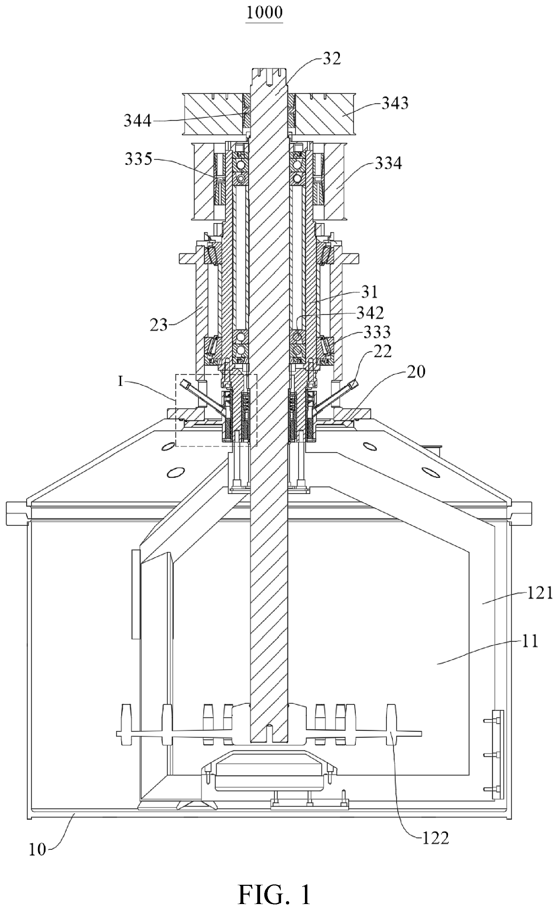

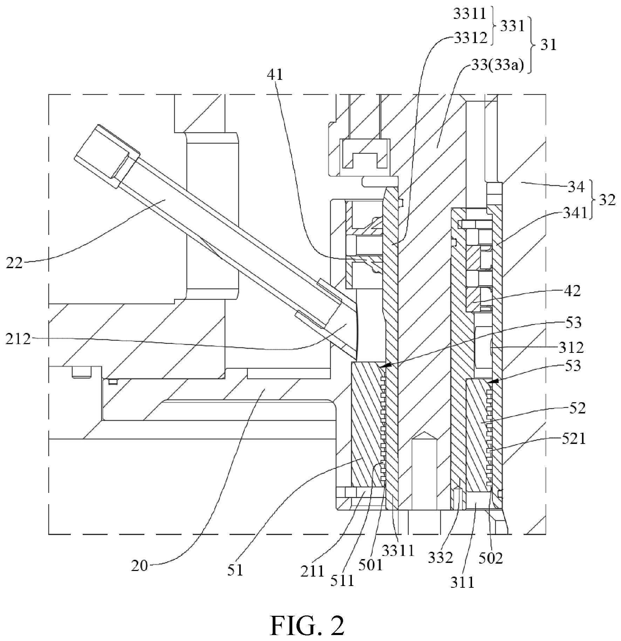

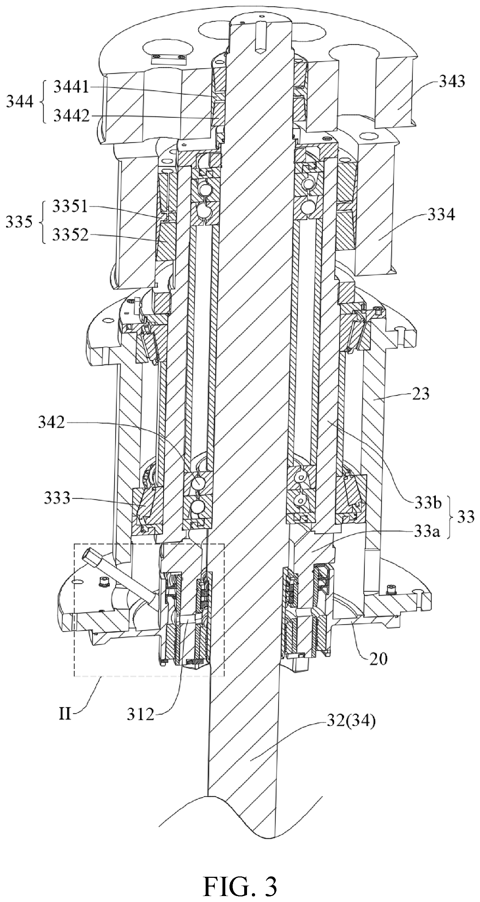

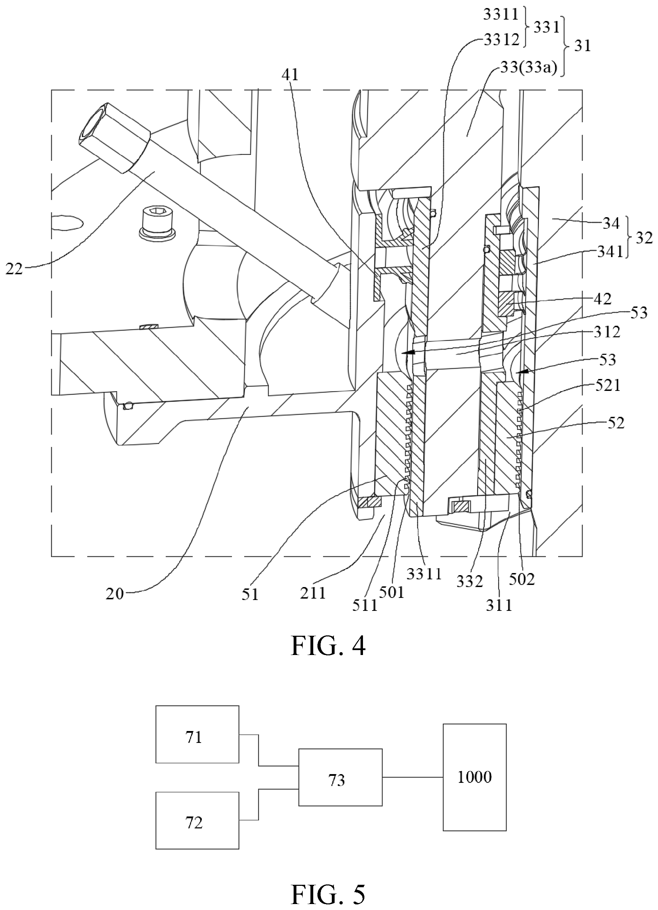

Reference is made to FIG. 1 and FIG. 2 together. FIG. 1 is a cross-sectional view of a kneading device 1000 provided in embodiments of the disclosure. FIG. 2 is an enlarged view of section I in FIG. 1. FIG. 3 is a cross-sectional view of the kneading device 1000 provided in embodiments of the disclosure, with some components being removed. FIG. 4 is an enlarged view of section II in FIG. 3. The kneading device 1000 includes a kneading cylinder 10, a mounting base 20, a first rotating shaft 31, a second rotating shaft 32, a first sealing member 41, and a second sealing member 42. A stirring chamber 11 for accommodating material to be stirred is defined in the kneading cylinder 10. The mounting base 20 is fixedly connected to the kneading cylinder 10, and is provided with a first mounting hole 211 for communicating with the stirring chamber 11. A side wall of the mounting base 20 is provided with a first through hole 212 communicating with the first mounting hole 211. The first rotating shaft 31 rotatably extends through the first mounting hole 211. The first rotating shaft 31 is provided with a second mounting hole 311 communicating with the stirring chamber 11 in an axial direction of the first rotating shaft 31. A side wall of the first rotating shaft 31 is provided with a second through hole 312 communicating with both the first mounting hole 211 and the second mounting hole 311. The second rotating shaft 32 rotatably extends through the second mounting hole 311 and is disposed coaxially with the first rotating shaft 31. The first sealing member 41 is disposed between the first rotating shaft 31 and the mounting base 20, and is located on a side of the first through hole 212 and the second through hole 312 away from the stirring chamber 11. The first sealing member 41, the mounting base 20, and the first rotating shaft 31 form a first air passage communicating the first through hole 212 with the stirring chamber 11. The second sealing member 42 is sealingly connected between the second rotating shaft 32 and the first rotating shaft 31, and is located on a side of the second through hole 312 away from the stirring chamber 11. The second sealing member 42, the first rotating shaft 31, and the second rotating shaft 32 form a second air passage communicating the second through hole 312 with the stirring chamber 11. The first sealing member 41 and the second sealing member 42 may be implemented as multiple sealing members, and the multiple first sealing members 41 and the multiple second sealing members 42 are arranged in the axial direction of the first rotating shaft 31, so as to enhance the sealing between the mounting base 20 and the first rotating shaft 31 to allow gas to flow into the first air passage, and to enhance the sealing between the first rotating shaft 31 and the second rotating shaft 32 to allow gas to flow into the second air passage.

Reference is made to FIG. 5. The disclosure further provides a kneading system. The kneading system includes a gas supply device 71, a gas suction device 72, and the kneading device 1000. The gas supply device 71 is configured to supply gas to the kneading device 1000, so as to deliver the gas to the stirring chamber 11 through the first air passage and the second air passage, thereby forming an airtight connection between the mounting base 20 and the first rotating shaft 31, and between the first rotating shaft 31 and the second rotating shaft 32, respectively. The gas suction device 72 is configured to evacuate gas from the kneading device 1000, so as to extract the gas from the stirring chamber 11 through the first air passage and the second air passage, thereby cleaning the first air passage and the second air passage. In some embodiments, the kneading system further includes a reversing valve 73 connected to the gas supply device 71, the gas suction device 72, and the kneading device 1000, respectively. The reversing valve 73 is configured to switch the connection of the kneading device 1000 between the gas supply device 71 and the gas suction device 72. For example, the reversing valve 73 has a first working position and a second working position. When the reversing valve 73 is in the first working position, the gas supply device 71 is connected to the kneading device 1000. When the reversing valve 73 is in the second working position, the gas suction device 72 is connected to the kneading device 1000.

In the kneading device 1000 of this embodiment, the side wall of the mounting base 20 is provided with the first through hole 212 communicating with the first mounting hole 211, the side wall of the first rotating shaft 31 is provided with the second through hole 312 communicating with both the first mounting hole 211 and the second mounting hole 311. The first sealing member 41, the mounting base 20, and the first rotating shaft 31 form the first air passage communicating the first through hole 212 with the stirring chamber 11. The second sealing member 42, the first rotating shaft 31, and the second rotating shaft 32 form the second air passage communicating the second through hole 312 with the stirring chamber 11. In this way, the gas supply device 71 can supply gas to the first air passage through the first through hole 212. After the gas enters the first air passage, a portion of the gas enters the stirring chamber 11 through the gap between the first rotating shaft 31 and the mounting base 20, and another portion of the gas enters the second air passage through the second through hole 312 and enters the stirring chamber 11 through the gap between the first rotating shaft 31 and the second rotating shaft 32. Powder particles in the stirring chamber 11 are blocked by air flow, making it difficult for the powder particles to enter the first air passage and the second air passage, thereby preventing the powder particles from entering the positions between the first rotating shaft 31 and the mounting base 20, and between the second rotating shaft 32 and the first rotating shaft 31. This prevents the powder particles from damaging the mounting base 20, the first rotating shaft 31, and the second rotating shaft 32, and thus improving the service life of the kneading device 1000.

Reference is made to FIG. 1. In this embodiment, the mounting base 20, the first rotating shaft 31, and the second rotating shaft 32 are disposed on the top of the kneading cylinder 10. That is, when the kneading device 1000 is placed on the ground, the mounting base 20, the first rotating shaft 31, and the second rotating shaft 32 are located on a side of the kneading cylinder 10 away from the ground.

The kneading device 1000 further includes a first stirring paddle 121 and a second stirring paddle 122 both disposed in the stirring chamber 11. The first stirring paddle 121 is connected to the first rotating shaft 31 and is configured to rotate under the drive of the first rotating shaft 31 to stir the material to be stirred. The second stirring paddle 122 is connected to the second rotating shaft 32 and is configured to rotate under the drive of the second rotating shaft 32 to stir the material to be stirred. The rotational speeds of the first rotating shaft 31 and the second rotating shaft 32 may be set to be different. For example, the rotational speed of the second rotating shaft 32 may be greater than the rotational speed of the first rotating shaft 31, so as to create a speed difference between the second stirring paddle 122 and the first stirring paddle 121, thereby better stirring the material to be stirred, allowing various components in the material to be stirred to be uniformly mixed, and improving the stirring efficiency and effect. The rotation directions of the first rotating shaft 31 and the second rotating shaft 32 may be the same or different. For example, the rotation direction of the first rotating shaft 31 and the rotation direction of the second rotating shaft 32 may be set to be different, so that various components in the material to be stirred are uniformly mixed, improving the stirring efficiency and effect. The first stirring paddle 121 may be configured as a wall-scraping paddle, and a blade of the first stirring paddle 121 is disposed in contact with the side wall of the stirring chamber 11 to prevent the material to be stirred from adhering to the chamber wall of the stirring chamber 11. The second stirring paddle 122 is configured as a dispersing paddle, and the dispersing paddle is provided with dispersing columns, which can disperse the material to be stirred, so as to refine the material to be stirred.

Reference is made to FIG. 2. The kneading device 1000 further includes a gas tube 22. The gas tube 22 is configured to communicate the first through hole 212 with the gas supply device 71. The first through hole 212 may be implemented as multiple first through holes 212, and the multiple first through holes 212 are spaced apart in a circumferential direction of the mounting base 20.

The first through hole 212 extends from a side of the mounting base 20 away from the first rotating shaft 31 toward a side of the mounting base 20 close to the first rotating shaft 31, and the first through hole 212 is inclined toward the stirring chamber 11. An opening of the first through hole 212 on the side of the mounting base 20 facing the first rotating shaft 31 is closer to the stirring chamber 11 than an opening of the first through hole 212 on the side of the mounting base 20 away from the first rotating shaft 31. The inclination of the first through hole 212 toward the stirring chamber 11 can reduce the bending degree of the first air passage, decrease the pressure loss of gas flowing through the first through hole 212, and increase the flow velocity of gas in the first air passage, thereby improving the airtight effect between the first rotating shaft 31 and the mounting base 20.

The second through hole 312 is implemented as multiple second through holes 312, and the multiple second through holes 312 are spaced apart and disposed around a circumferential direction of the first rotating shaft 31. With the multiple second through holes 312, gas is allowed to enter the second air passage from the first air passage more quickly, improving the airtight effect between the second rotating shaft 32 and the first rotating shaft 31. Exemplarily, the multiple second through holes 312 are uniformly arranged and spaced apart in the circumference of the first rotating shaft 31, so that gas can uniformly enter the second air passage, better maintaining a gap between the first rotating shaft 31 and the second rotating shaft 32.

The kneading device 1000 further includes a first labyrinth member 51 disposed between the mounting base 20 and the first rotating shaft 31. The first labyrinth member 51 is disposed around the first rotating shaft 31, and is spaced apart from the first rotating shaft 31 and/or the mounting base 20 to form a first gap 501 communicating with the first air passage.

Exemplarily, in this embodiment, the first labyrinth member 51 is independent relative to the mounting base 20 and the first rotating shaft 31. That is, the first labyrinth member 51 is separately disposed from the mounting base 20 and the first rotating shaft 31, facilitating the mounting and maintenance of the first labyrinth member 51. The first labyrinth member 51 is disposed on a side of the mounting base 20 facing the first rotating shaft 31, and the first labyrinth member 51 is spaced apart from the first rotating shaft 31 to form the first gap 501. In some embodiments, the first labyrinth member 51 may be disposed on the first rotating shaft 31. For example, the first labyrinth member 51 may be sleeved on an outer wall of the first rotating shaft 31. The first labyrinth member 51 is spaced apart from an inner wall of the mounting base 20 to form the first gap 501. In some embodiments, the first labyrinth member 51 may be spaced apart from the first rotating shaft 31 and the mounting base 20 respectively to form the first gap 501. For example, the first labyrinth member 51 may be fixed relative to the mounting base 20 or the first rotating shaft 31 through other connecting members, and the first labyrinth member 51 is spaced apart from the first rotating shaft 31 and the mounting base 20 respectively to form the first gap 501.

The first labyrinth member 51 is provided with at least one first annular groove 511 on a side of the first labyrinth member 51 facing the first gap 501. The first annular groove 511 may be implemented as multiple first annular grooves 511. The multiple first annular grooves 511 are spaced apart in the axial direction of the first rotating shaft 31. An expansion space is defined between the first labyrinth member 51 and the first rotating shaft 31 at a position corresponding to the first annular groove 511. A gap, i.e., a throttle orifice, is formed between the first labyrinth member 51 and the first rotating shaft 31 at positions corresponding to each two adjacent first annular grooves 511. When gas supplied by the gas supply device 71 passes through the gap between the first labyrinth member 51 and the first rotating shaft 31, due to the reduced flow area, the gas pressure increases, and the gas maintains a gap between the first labyrinth member 51 and the first rotating shaft 31, thereby forming a non-contact gas seal, reducing or avoiding abrasion between the first labyrinth member 51 and the mounting base 20. After the gas flows through the gap and enters the expansion space, the gas expands, the gas pressure decreases, the density of the gas decreases, and the flow rate and flow velocity increase, thereby better blowing the powder particles that accidentally enter the first air passage back into the stirring chamber 11. With the multiple first annular grooves 511, multiple gaps and multiple expansion spaces may be defined between the first labyrinth member 51 and the first rotating shaft 31, thereby increasing the flow velocity of the gas after passing through the first gap 501, further preventing the powder particles from entering the first air passage.

The first rotating shaft 31 includes a first shaft body 33 and a first bush 331. The first bush 331 is sleeved on the first shaft body 33. The second mounting hole 311 is defined in the first shaft body 33 and extends in the axial direction of the first shaft body 33. The first labyrinth member 51 is spaced apart from the first bush 331. The first bush 331 includes a first section 3311 and a second section 3312. The first section 3311 is connected to a side of the second section 3312 away from the stirring chamber 11. A diameter of the first section 3311 is greater than a diameter of the second section 3312. A gap between the first section 3311 and the mounting base 20 is smaller than a gap between the second section 3312 and the mounting base 20. A connection portion between the first section 3311 and the second section 3312 is opposite to the opening of the first through hole 212 on the side of the mounting base 20 facing the first rotating shaft 31, or is located on a side of the opening of the first through hole 212 on the side of the mounting base 20 facing the first rotating shaft 31 away from the stirring chamber 11. The opening of the first through hole 212 on the side of the mounting base 20 facing the first rotating shaft 31 is opposite to an end portion of the second section 3312 close to the first section 3311. The second through hole 312 is defined at the end portion of the second section 3312 close to the first section 3311, so that gas can better flow into the second through hole 312. An inclined surface transition or arc transition may be formed between the first section 3311 and the second section 3312. The connection portion between the first section 3311 and the second section 3312 forms a flow guiding portion to guide the gas into the first gap 501 and the second through hole 312.

The kneading device 1000 further includes a second labyrinth member 52 disposed between the first rotating shaft 31 and the second rotating shaft 32. The second labyrinth member 52 is disposed around the second rotating shaft 32, and is spaced apart from the first rotating shaft 31 and/or the second rotating shaft 32 to form a second gap 502 communicating with the second air passage.

Exemplarily, in this embodiment, the second labyrinth member 52 is independent relative to the first rotating shaft 31 and the second rotating shaft 32. That is, the second labyrinth member 52 is separately disposed from the first rotating shaft 31 and the second rotating shaft 32, facilitating the mounting and maintenance of the second labyrinth member 52. The second labyrinth member 52 may be disposed on the first rotating shaft 31, and is spaced apart from the second rotating shaft 32 to form the second gap 502. When gas enters the stirring chamber 11 through the second gap 502, the gas can blow away powder material adhering to the outer wall of the second rotating shaft 32, preventing excessive powder material from adhering to the second rotating shaft 32, thereby ensuring that the components of the material to be stirred in the stirring chamber 11 are uniformly mixed according to a preset ratio, and reducing the Weissenberg effect of the material to be stirred to prevent the powder particles from entering the second gap 502. In some embodiments, the second labyrinth member 52 may be disposed on the second rotating shaft 32, and is spaced apart from the first rotating shaft 31 to form the second gap 502. In some embodiments, the second labyrinth member 52 may be fixed relative to the first rotating shaft 31 or the second rotating shaft 32 through other connecting members, and respectively forms the second gap 502 with the first rotating shaft 31 and the second rotating shaft 32.

The second labyrinth member 52 is provided with at least one second annular groove 521 on a side of the second labyrinth member 52 facing the second gap 502. The second annular groove 521 may be implemented as multiple second annular grooves 521. The multiple second annular grooves 521 are spaced apart in the axial direction of the first rotating shaft 31. An expansion space is defined between the second labyrinth member 52 and the second rotating shaft 32 at a position corresponding to the second annular groove 521. A gap, i.e., a throttle orifice, is formed between the second labyrinth member 52 and the second rotating shaft 32 at positions corresponding to each two adjacent second annular grooves 521. When gas supplied by the gas supply device 71 passes through the gap between the second labyrinth member 52 and the second rotating shaft 32, due to the reduced flow area, the gas pressure increases, and the gas maintains a gap between the second labyrinth member 52 and the second rotating shaft 32, thereby forming a non-contact gas seal, reducing or avoiding abrasion between the second labyrinth member 52 and the second rotating shaft 32. After the gas flows through the gap and enters the expansion space, the gas expands, the gas pressure decreases, the density of the gas decreases, and the flow rate and flow velocity increase, thereby better blowing the powder particles that accidentally enter the second air passage back into the stirring chamber 11. With the multiple second annular grooves 521, multiple gaps and multiple expansion spaces may be defined between the second labyrinth member 52 and the second rotating shaft 32, thereby increasing the flow velocity of the gas after passing through the second gap 502, further preventing the powder particles from entering the second air passage.

The second rotating shaft 32 includes a second shaft body 34 and a second bush 341 sleeved on the second shaft body 34. The second bush 341 can protect the second shaft body 34 to prevent the second shaft body 34 from being worn, thereby improving the stability and service life of the second rotating shaft 32. When the second bush 341 is excessively worn, the second bush 341 can be replaced, avoiding the need to replace the entire second rotating shaft 32, thus reducing the maintenance cost of the kneading device 1000. The second sealing member 42 is disposed between the second bush 341 and the first shaft body 33. The second bush 341 may be implemented as multiple second bushes 341, and the multiple second bushes 341 are arranged in the axial direction of the second shaft body 34.

The first rotating shaft 31 further includes a third bush 332. The third bush 332 is disposed on an inner wall of the first shaft body 33. The second labyrinth member 52 is disposed on the third bush 332, and is located between the third bush 332 and the second bush 341. The third bush 332 can protect the inner wall of the first shaft body 33 to prevent the first shaft body 33 from being worn, thereby improving the stability and service life of the first rotating shaft 31.

A guiding surface 53 is provided on a side of the first labyrinth member 51 away from the stirring chamber 11 and/or a side of the second labyrinth member 52 away from the stirring chamber 11. In this embodiment, the guiding surface 53 is provided on the side of the first labyrinth member 51 away from the stirring chamber 11, and the guiding surface 53 is provided on the side of the second labyrinth member 52 away from the stirring chamber 11, to guide the gas in the first air passage and the second air passage. In this way, the pressure loss of the gas is reduced, allowing the gas to better enter the first gap 501 and the second gap 502, and facilitating the mounting of the first labyrinth member 51 and the second labyrinth member 52 with other structures. A chamfer may be provided on an end portion of the first labyrinth member 51 away from the stirring chamber 11 and on a side of the first labyrinth member 51 close to the first rotating shaft 31, with the inclined surface of the chamfer forming the guide surface 53. A chamfer may be provided on an end portion of the second labyrinth member 52 away from the stirring chamber 11 and on a side of the second labyrinth member 52 close to the second rotating shaft 32, with the inclined surface of the chamfer forming the guide surface 53. In some embodiments, the guiding surface 53 is provided on the side of one of the first labyrinth member 51 and the second labyrinth member 52 away from the stirring chamber 11.

Reference is made to FIG. 1 and FIG. 3 together. The kneading device 1000 further includes a fixing base 23 fixedly connected to a side of the mounting base 20 away from the stirring chamber 11. The fixing base 23 is configured as a hollow structure, and the first rotating shaft 31 is disposed in the fixing base 23. The first shaft body 33 includes a first portion 33a and a second portion 33b fixedly connected to a side of the first portion 33a away from the stirring chamber 11. The first portion 33a is located between the mounting base 20 and the second rotating shaft 32. The second portion 33b is located between the fixing base 23 and the second rotating shaft 32. A first bearing 333 is disposed between the second portion 33b and the fixing base 23. The first bearing 333 is configured to limit the second portion 33b and allow the second portion 33b to rotate relative to the fixing base 23. The first sealing member 41 and the first labyrinth member 51 are disposed between the first portion 33a and the mounting base 20. The second sealing member 42 and the second labyrinth member 52 are disposed between the second rotating shaft 32 and the first portion 33a.

A second bearing 342 is disposed between the second portion 33b and the second rotating shaft 32. The second bearing 342 is configured to limit the second rotating shaft 32 and allow the second rotating shaft 32 to rotate relative to the second portion 33b. The rotational speed of the second rotating shaft 32 may be greater than the rotational speed of the second portion 33b.

The first rotating shaft 31 further includes a first connecting member 334 disposed at an end portion of the second portion 33b away from the first portion 33a. The first connecting member 334 is configured to be in driving connection with a driver, and the driver drives the second portion 33b and the first portion 33a to rotate relative to the mounting base 20 through the first connecting member 334. The first connecting member 334 is configured as a hollow structure, and the second portion 33b extends through the first connecting member 334. A first tensioning component 335 is disposed between the first connecting member 334 and the second portion 33b. The first tensioning component 335 abuts against the first connecting member 334 and the second portion 33b respectively, so as to fix the first connecting member 334 relative to the second portion 33b.

Specifically, the first tensioning component 335 includes a first tensioning member 3351 and a first mating member 3352. A surface of the first tensioning member 3351 facing the first mating member 3352 is an inclined surface. The inclined surface and the axial direction of the first rotating shaft 31 are disposed at an included angle. The first mating member 3352 is provided with a mating surface that mates with the inclined surface. The first tensioning component 335 further includes a first connecting bolt. The first connecting bolt is configured to apply pressure to the first tensioning member 3351 and the first mating member 3352 in the axial direction of the first rotating shaft 31. Under pressure, the first tensioning member 3351 tends to move relative to the first mating member 3352 in the axial direction of the first rotating shaft 31. Due to the mating of the inclined surface and the mating surface, the first tensioning member 3351 tends to move relative to the first mating member 3352 in the radial direction of the first rotating shaft 31, thereby applying lateral pressure to the first connecting member 334 and the second portion 33b, thus fixing the first connecting member 334 relative to the second portion 33b. In some embodiments, the first connecting member 334 may be fixedly connected to the second portion 33b by means of clamping, welding, bonding, screwing, or the like.

The second rotating shaft 32 further includes a second connecting member 343 disposed at an end portion of the second shaft body 34 away from the stirring chamber 11. The second connecting member 343 is configured to be in driving connection with a driver, and the driver drives the second shaft body 34 to rotate through the second connecting member 343. The second connecting member 343 is configured as a hollow structure, and the second rotating shaft 32 extends through the second connecting member 343. A second tensioning component 344 is disposed between the second connecting member 343 and the second rotating shaft 32. The second tensioning component 344 abuts against the second connecting member 343 and the second rotating shaft 32 respectively, so as to fix the second connecting member 343 relative to the second rotating shaft 32.

Specifically, the second tensioning component 344 includes a second tensioning member 3441 and a second mating member 3442. A surface of the second tensioning member 3441 facing the second mating member 3442 is an inclined surface. The inclined surface and the axial direction of the second rotating shaft 32 are disposed at an included angle. The second mating member 3442 is provided with a mating surface that mates with the inclined surface. The second tensioning component 344 further includes a second connecting bolt. The second connecting bolt is configured to apply pressure to the second tensioning member 3441 and the second mating member 3442 in the axial direction of the second rotating shaft 32. Under pressure, the second tensioning member 3441 tends to move relative to the second mating member 3442 in the axial direction of the second rotating shaft 32. Due to the mating of the inclined surface and the mating surface, the second tensioning member 3441 tends to move relative to the second mating member 3442 in the radial direction of the second rotating shaft 32, thereby applying lateral pressure to the second connecting member 343 and the second rotating shaft 32, thus fixing the second connecting member 343 relative to the second rotating shaft 32. In some embodiments, the second connecting member 343 may be fixedly connected to the second rotating shaft 32 by means of clamping, welding, bonding, screwing, or the like.

In the above embodiments, the illustration of each embodiment has its own emphasis. For parts not illustrated in detail in a particular embodiment, reference may be made to the relevant illustrations in other embodiments.

The above are only specific embodiments of the disclosure, but the protection scope of the disclosure is not limited thereto. Any person skilled in the art can easily conceive of various equivalent modifications or substitutions within the technical scope disclosed in the disclosure, and these modifications or substitutions shall be covered within the protection scope of the disclosure. Therefore, the protection scope of the disclosure shall be subject to the protection scope of the claims.

## Claims

1. A kneading device, comprising:
a kneading cylinder, wherein a stirring chamber is defined in the kneading cylinder;
a mounting base connected to the kneading cylinder, wherein the mounting base is provided with a first mounting hole communicating with the stirring chamber, and a side wall of the mounting base is provided with a first through hole communicating with the first mounting hole;
a first rotating shaft rotatably extending through the first mounting hole, wherein the first rotating shaft is provided with a second mounting hole communicating with the stirring chamber, and a side wall of the first rotating shaft is provided with a second through hole communicating with both the first mounting hole and the second mounting hole;
a second rotating shaft rotatably extending through the second mounting hole and disposed coaxially with the first rotating shaft;
a first sealing member disposed between the first rotating shaft and the mounting base, and located on a side of the first through hole and the second through hole away from the stirring chamber; wherein the first sealing member, the mounting base, and the first rotating shaft form a first air passage communicating the first through hole with the stirring chamber; and
a second sealing member sealingly connected between the second rotating shaft and the first rotating shaft, and located on a side of the second through hole away from the stirring chamber; wherein the second sealing member, the first rotating shaft, and the second rotating shaft form a second air passage communicating the second through hole with the stirring chamber.

2. The kneading device according to claim 1, wherein the first through hole extends from a side of the mounting base away from the first rotating shaft toward a side of the mounting base close to the first rotating shaft, and the first through hole is inclined toward the stirring chamber.

3. The kneading device according to claim 1, wherein the second through hole is implemented as a plurality of second through holes, and the plurality of second through holes are spaced apart and disposed around a circumferential direction of the first rotating shaft.

4. The kneading device according to claim 1, wherein the kneading device further comprises a first labyrinth member disposed between the mounting base and the first rotating shaft, wherein the first labyrinth member is disposed around the first rotating shaft, the first labyrinth member is spaced apart from the first rotating shaft or the mounting base to form a first gap communicating with the first air passage, and the first labyrinth member is provided with at least one first annular groove on a side of the first labyrinth member facing the first gap.

5. The kneading device according to claim 4, wherein the first rotating shaft comprises a first shaft body and a first bush sleeved on the first shaft body, and the first labyrinth member is spaced apart from the first bush to form the first gap.

6. The kneading device according to claim 5, wherein the first bush comprises a first section and a second section, the first section is connected to a side of the second section away from the stirring chamber, and a diameter of the first section is greater than a diameter of the second section.

7. The kneading device according to claim 6, wherein the second through hole is defined at an end portion of the second section close to the first section.

8. The kneading device according to claim 4, wherein the kneading device further comprises a second labyrinth member disposed between the first rotating shaft and the second rotating shaft, wherein the second labyrinth member is disposed around the second rotating shaft, the second labyrinth member is spaced apart from the first rotating shaft or the second rotating shaft to form a second gap communicating with the second air passage, and the second labyrinth member is provided with at least one second annular groove on a side of the second labyrinth member facing the second gap.

9. The kneading device according to claim 8, wherein the second rotating shaft comprises a second shaft body and a second bush sleeved on the second shaft body, and the second labyrinth member is spaced apart from the second bush to form the second gap.

10. The kneading device according to claim 8, wherein a guiding surface is provided on a side of the first labyrinth member away from the stirring chamber and a guiding surface is provided on a side of the second labyrinth member away from the stirring chamber.
